# EUROPÄISCHE PATENTSCHRIFT

(11) **EP 0 945 370 B1**
(45) Veröffentlichungstag und Bekanntmachung des Hinweises auf die Patenterteilung: **05.06.2002**
(21) Anmeldenummer: 99250072.8
(22) Anmeldetag: 10.03.1999
(51) Int. Cl.: B65G 1/00

(54) **Positioniereinrichtung für mindestens eine Palette**
Positioning device for at least one pallet
Dispositif de positionnement pour au moins une palette

(30) Priorität: 26.03.1998 DE 19814635
(43) Veröffentlichungstag der Anmeldung: 29.09.1999
(73) Patentinhaber: Siemens AG, 80333 München (DE)
(72) Erfinder: Kröll, Joachim, 41363 Jüchen (DE); Franzen, Hermann, Dipl.-Ing., 41238 Mönchengladbach (DE)
(74) Vertreter: Meissner, Peter E., Dipl.-Ing.

(56) Entgegenhaltungen:
- EP-A- 0 594 869
- DE-A- 4 222 099
- DE-U- 9 210 612

## Beschreibung

Die Erfindung betrifft eine Positioniereinrichtung für mindestens eine Palette, gemäß dem Anspruch 1.

Es ist bekannt, beim Entladen von Schiffen Behälter mit einem käfigartigen Gehäuse zu verwenden, die heb- und senkbar sowie mittels einer Fahrkatze an einem Ausleger verfahrbar sind. Auf dem Boden des Behälters ist dabei eine Fläche zur Ablage von Paletten vorgesehen, siehe z.B. DE 92 10 612 U, die an einer offenen Seite des Behälters in den Behälter einoder aus dem Behälter auslagerbar sind. Der mit Paletten beladene Behälter wird dann aus dem Schiff gehoben und an einer Stelle abgesetzt, wo die Entnahme der Paletten erfolgt.

Nachteilig ist dabei, daß die Paletten regelmäßig gegenüber einer Solllage mit einem Winkelversatz und einem Seitenversatz auf der Ablagefläche abgelegt sind, was bei einer selbsttätigen Auslagerung der Paletten mittels eines Horizontalförderers den reibungsfreien Ablauf stört.

Die Aufgabe der Erfindung ist es, eine Positioniereinrichtung und eine Fördereinrichtung mit einer derartigen Positioniereinrichtung zu schaffen, bei denen eine selbsttätige Ausrichtung der Paletten zur anschließenden selbsttätigen Auslagerung mittels eines Horizontalförderers ermöglicht wird.

Die Lösung dieser Aufgabe ergibt sich erfindungsgemäß hinsichtlich der Positioniereinrichtung durch die in Patentanspruch 1 angegebenen Merkmale. Durch die kennzeichnenden Merkmale der Unteransprüche 2 bis 9 ist die Positioniereinrichtung in vorteilhafter Weise weiter ausgestaltet. Die Ausbildung der Fördereinrichtung geht aus dem Anspruch 10 hervor.

Die Erfindung sieht hinsichtlich der Positioniereinrichtung vor, daß die Ablagefläche an zwei gegenüberliegenden Seiten durch zwei vertikal parallel zueinander angeordnete, synchron in eine zentrische Lage gegeneinander verschiebbare Anlageflächen begrenzt ist, daß der Behälter von oben in eine zur Außenkontur des Behälterquerschnitts korrespondierende Vorzentrieröffnung eines Zentrierrahmens einsetzbar und auf eine darunter angeordnete horizontale Auflagefläche aufsetzbar ist, wobei die Anlageflächen durch Umlenkung der Gewichtskraft des beladenen Behälters selbsttätig bis auf die Palettenbreite aufeinanderzu bewegbar sind. Die in einem vorbestimmten Bereich abgelegten Paletten werden also ohne zusätzlichen Energieaufwand allein durch Umlenkung der Gewichtskraft mit Hilfe der Anlageflächen so ausgerichtet, daß deren Längs- bzw Schmalseiten nahezu parallel zu den Anlageflächen verlaufen. Es ist damit nicht mehr notwendig, die Paletten für die selbsttätige Entnahme manuell oder mit anderen Hilfsmitteln auszurichten.

Zweckmäßigerweise erfolgt die Umlenkung der Gewichtskraft des beladenen Behälters dadurch, daß an der Auflagefläche vertikal nach oben gerichtete, beim Aufsetzen des Behälters in Öffnungen des Behälterbodens eindringende und sich im aufgesetzten Zustand über die Auflagefläche hinaus in den Behälter hinein erstreckende Elemente angeordnet sind, die mit den Auflageflächen derart korrespondieren, daß die Anlageflächen beim Aufsetzen des Behälters jeweils zu der gegenüberliegenden Seitenfläche der Palette hin bewegbar sind. Die Anlageflächen werden also durch spezielle Elemente mittels der Gewichtskraft bewegt, und zwar synchron, so daß auf einfache Art und Weise eine Ausrichtung der Palette mit einer zum Palettengewicht proportionalen Verschiebekraft erfolgt.

Die Positioniereinrichtung gestaltet sich besonders einfach, wenn jedes Element als ein mit der Spitze vertikal nach oben ausgerichteter Keil ausgebildet ist, dessen keilförmige von unten nach oben gesehen schräg nach außen von der Anlagefläche wegführend verlaufende Seite der jeweils zugehörigen Anlagefläche zugewandt ist. Aufgrund ihrer Keilform bewirken die in den Behälter eindringenden Elemente die synchrone Bewegung der Anlageflächen gegen die Palette.

Die Ausrichtung der Paletten verbessert sich, wenn jede Ablagefläche an einer plattenförmigen Schubleiste ausgebildet ist.

Eine gleichmäßige synchrone Parallelbewegung der Schubleisten wird dadurch erzielt, daß jede Schubleiste durch zwei in Längsrichtung beabstandete Keile bewegbar ist.

Die Rückstellung der Schubleisten erfolgt dadurch, daß jede Schubleiste durch Ruckstellfedern in ihre Ausgangslage rückgestellbar ist

Zweckmäßigerweise ist jede Öffnung als Langloch ausgebildet, dessen Längserstreckung quer zur Anlagefläche verläuft.

Mit wenigen Mitteln kommt man aus, wenn jede Schubleiste in ihrer Ausgangslage die darunter liegende Öffnungen nahezu vollständig abdeckt, so daß beginnend mit der Keilspitze die Schubleiste durch den Keil sicher zur Seite gedrückt wird,

Zur Übernahme der Paletten mittels eines Horizontalförderers ist es vorgesehen, daß die Ablagefläche auf einem vertikal heb- und senkbaren Rahmen angeordnet ist, so daß sie nach unten weg bewegt werden kann. In den dann freien Bereich kann anschließend der Horizontalförderer eingebracht werden.

Die Erfindung sieht hinsichtlich der Fordereinrichtung vor, daß der obere Rand des Behälters mit mindestens einem Halteelement versehen ist, über das er im eingesetzten Zustand am Zentrierrahmen abgestützt ist, daß an mindestens einer der offenen Seiten des Behälters ein Hubgerüst außerhalb des Behälters vorgesehen ist, an dem zwei in Richtung parallel zu den Anlageflächen in Aufnahmeöffnungen der davor abgelegten Palette ein- und ausfahrbare horizontale Gabeln vorgesehen sind, durch welche die Paletten anhebbar und aus dem Behälter bewegbar sind, daß bei aus dem Behälter nach außen bewegten Paletten und entferntem Behälter in den Bereich der abgesenkten Ablagefläche ein Honzontalforderer bewegbar ist und daß die Paletten auf dem Horizontalförderer durch Einfahren und Absenken der Gabeln ablegbar und nach Zurückfahren der Gabeln durch den Honzontalforderer zu einem anderen Ort hin transportierbar sind.

Ein Ausführungsbeispiel der Erfindung ist in der Zeichnung dargestellt und wird nachfolgend näher beschrieben Es zeigen:
- Fig. 1: eine Vorderansicht einer Fördereinrichtung mit Positioniereinrichtung,
- Fig. 2: eine Draufsicht auf den Boden eines Behälters mit vier Paletten,
- Fig. 3: eine Vorderansicht eines auf der Auflagefläche aufgesetzten Behalters,
- Fig. 4: eine Draufsicht auf die vier ausgerichteten Paletten mit anliegenden Anlageflächen der Schubleisten,

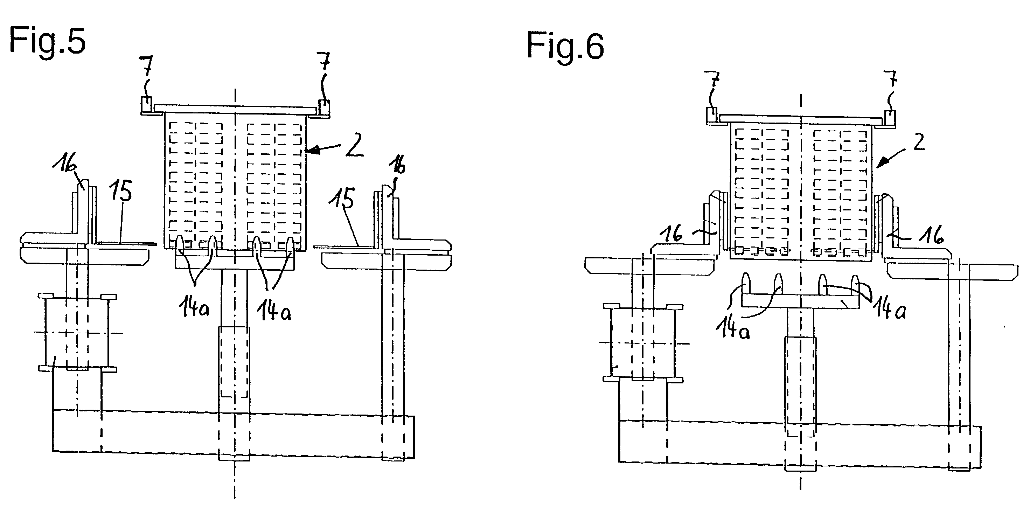

- Fig. 5: eine Vorderansicht gemäß Fig. 3 mit beidseitig angeordneten Hubgerüsten und ausgefahrenen Gabeln,
- Fig. 6: eine Darstellung gemäß Fig. 5 mit eingefahrenen Gabeln,
- Fig. 7: eine Draufsicht gemäß Fig. 4 mit teilweise eingefahrenen Gabeln,
- Fig. 8: eine Draufsicht gemäß Fig. 4 mit vollständig eingefahrenen Gabeln,
- Fig. 9: eine Draufsicht gemäß Fig 4 mit aus dem Behälter bewegten, auf den Gabeln abgestützten Paletten,
- Fig. 10: eine Vorderansicht einer Fördereinrichtung mit entferntem Behälter und einem Honzontalförderer in Bereitschaftsstellung,
- Fig 11: die Anordnung der auf den Gabeln abgestützten Paletten vor Einfahren des Horizontalförderers,
- Fig. 12: eine Draufsicht gemäß Fig. 11 mit Horizontalförderer,
- Fig. 13: eine Darstellung gemäß Fig. 10 mit auf dem Horizontalförderer abgelegten Paletten,
- Fig. 14: eine Draufsicht auf den Horizontalförderer gemäß Fig. 13,
- Fig. 15: eine Vorderansicht gemaß Fig. 13 mit zurückgefahrenen Gabeln,
- Fig. 16: eine Draufsicht auf die Darstellung gemäß Fig. 15 und
- Fig. 17: eine Draufsicht gemäß Fig. 16 mit aus dem Umschlagbereich gefahrenem Honzontalförderer.

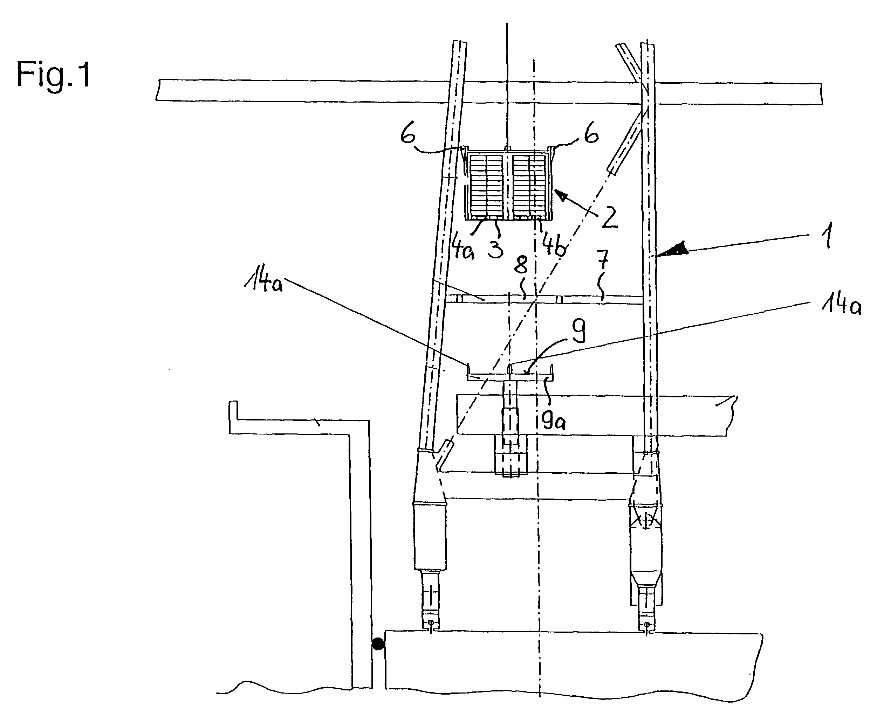

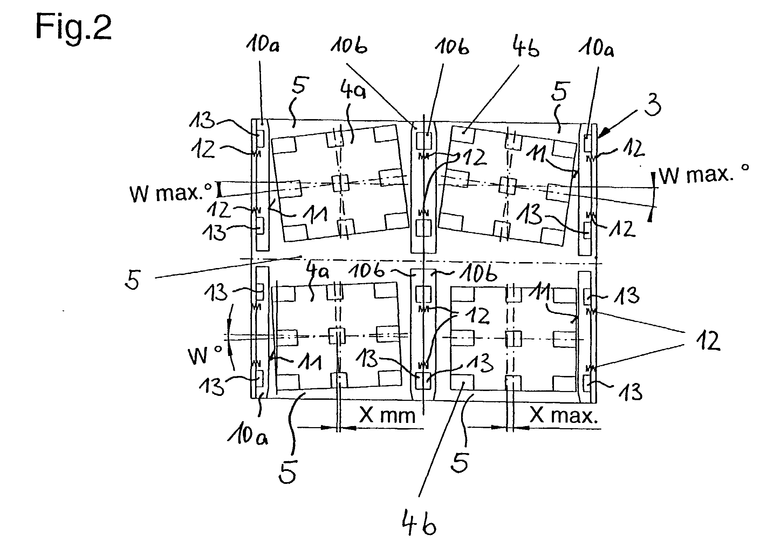

Fig 1 zeigt eine Vorderansicht einer Fördereinrichtung 1 zum Beladen eines Schiffes, bei der ein heb- und senkbarer Behälter 2 mittels einer nicht gezeigten Fahrkatze an einem Ausleger eines Kranes verfahrbar ist. Der Behälter 2 weist einen kafigartiges Gehäuse auf, das (bezogen auf Fig. 1) von der vorderen und hinteren Seite aus zugänglich ist. Auf dem Boden 3 des Behalters 2 sind Paletten 4a, 4b jeweils auf einer Ablagefläche 5 (s. Fig 2) abgelegt Am oberen Rand sind am Behälter 2 Halteelemente 6 angeordnet.

Fig. 1 zeigt unterhalb des Behälters 2 einen Zentrierrahmen 7 mit einer Vorzentrieröffnung 8, die zur Außenkontur des Behälterquerschnitts korrespondiert In die Öffnung 8 ist der Behälter 2 von oben durch Absenken einsetzbar. Im eingesetzten Zustand stützt sich der Behälter 2 mit den Halteelementen 6 am Zentrierrahmen 7 ab. Gleichzeitig sitzt der Behalter 2 auf einer unter dem Zentrierrahmen 7 angeordneten Auflagefläche 9 auf. Die Auflagefläche 9 ist auf einem vertikal heb- und senkbaren Rahmen 9a angeordnet.

Fig 2 zeigt eine mögliche Anordnung von vier Paletten auf dem Boden 3 des Behälters 2, der vier vorgesehene Ablageflachen 5 für jeweils eine Palette 4a, 4b aufweist Deutlich ist in Fig. 2 zu erkennen, daß die Ablageflächen 5 für die jeweiligen Paletten 4a, 4b, die alle die gleichen Abmessungen aufweisen, um ein vorbestimmtes Maß größer als die Paletten 4a, 4b sind. Dadurch können die einzelnen Paletten 4a, 4b gegenüber einer gewünschten Sollposition nur um einen maximalen Winkelversatz Wmax verdreht und einen maximalen Seitenversatz Xmax versetzt sein

Wie Fig. 2 erkennen läßt, sind auf den Auflageflächen 5 des Behälterbodens jeweils rechts und links von einer Palette 4a, 4b plattenförmige Schubleisten 10a, 10b angeordnet. An den Schubleistenpaaren 10a, 10b ist auf der den Paletten 4a, 4b zugewandten Seite jeweils eine vertikale Anlagefläche 11 ausgebildet, wobei sich jeweils zwei den Paletten 4a, 4b zugewandte Anlageflächen 11 parallel gegenüberliegen. Die Schubleistenpaare 10a, 10b und damit die zugehörigen Anlageflächen 11 begrenzen die Ablageflächen 5 der Paletten 4a, 4b und sind synchron in eine zentrische Lage gegeneinander verschiebbar. In ihrer Ausgangslage werden die Schubleisten 10a, 10b mittels Federn 12 gehalten; jede Schubleiste 10a, 10b ist durch die Federn 12 in ihre Ausgangslage rückstellbar. Verdeckt von den Schubleisten 10a, 10b sind in Fig. 2 im Behälterboden ausgebildete, in Leistenlängsrichtung beabstandete Öffnungen 13 erkennbar.

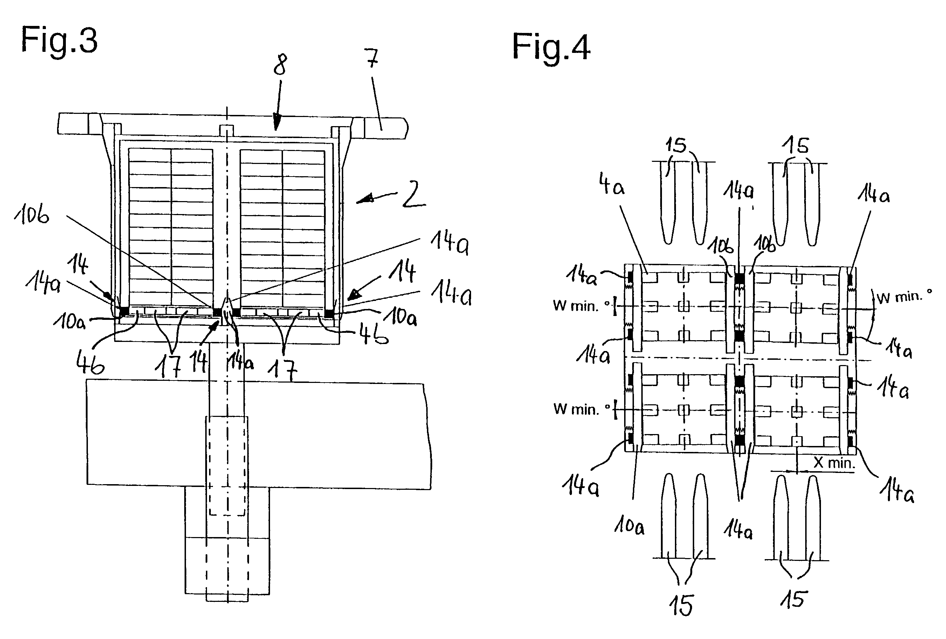

Fig 3 zeigt eine Vorderansicht eines auf der Auflagefläche 9 aufgesetzen Behälters 2. Der Fig. 3 ist entnehmbar, daß an der Auflageflache 9 vertikal nach oben gerichtete Elemente 14 in Form von Keilen 14a angeordnet sind. Diese Keile 14a dringen beim Aufsetzen des Behälters 2 in die Öffnungen 13 im Behälterboden 3 ein und erstrecken sich bei aufgesetztem Behälter 2 über die Auflagefläche 5 hinaus in den Behälter 2 hinein. Die Öffnungen 13 sind als Langloch ausgebildet, deren Längserstreckung quer zur Anlagefläche 11 verläuft. Fig. 3 zeigt auch, daß die Spitzen der Keile 14a vertikal nach oben weisen und daß deren keilförmige Seite der jeweils zugehörigen Anlagefläche 11 zugewandt ist. Und zwar so, daß von unten nach oben gesehen diese Seite schräg nach außen gerichtet ist, also von der Anlagefläche wegführt. Diese Schräge der Keile 14a bewirkt jeweils, daß der in die Öffnung 13 eindringende Keil 14a die zugehörige Schubleiste 10a oder 10b nach innen drückt, so daß sich die Anlageflächen 11 beim Aufsetzen des Behälters 2 jeweils auf die gegenüberliegende Seitenfläche der Palette 4a, 4b hin bewegt, d. h die Keile 14a korrespondieren in dieser Weise mit den Anlageflächen 11. Hierbei werden die Anlageflächen 11 über die Keile 14a durch Umlenkung der Gewichtskraft des beladenen Behälters 2 jeweils bis auf die Palettenbreite selbsttätig aufeinander zu bewegt. Diese der Gewichtskraft proportionale Kraft ist ausreichend, um die geladenen Paletten 4a, 4b mittig zu den Anlageflächen 11 sicher auszurichten. Jede Schubleiste 10a, 10b ist also durch zwei in Leistenlängsrichtung beabstandete Keile 14a bewegbar.

Die Kombination von Keilen 14a und Schubleisten 10a, 10b ist allerdings nur eine mögliche Ausgestaltungsform. Eine andere vorteilhafte Ausgestaltung kann auch so aussehen, daß die keilförmige Seite selbst die Funktion der Anlagefläche 11 übernimmt, also die Anlagefläche 11 bildet.

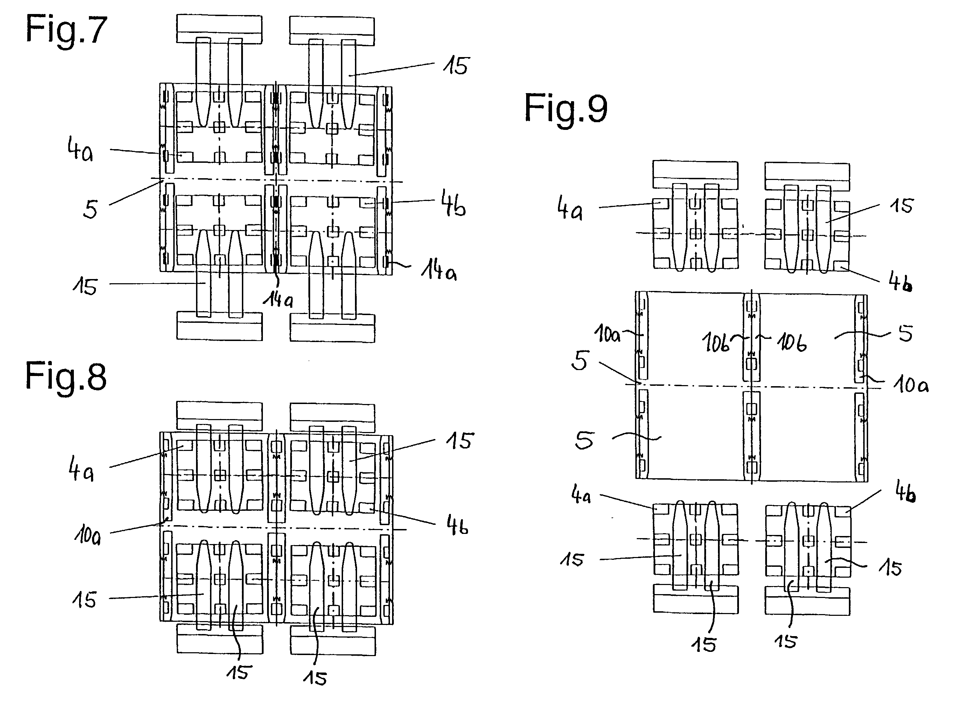

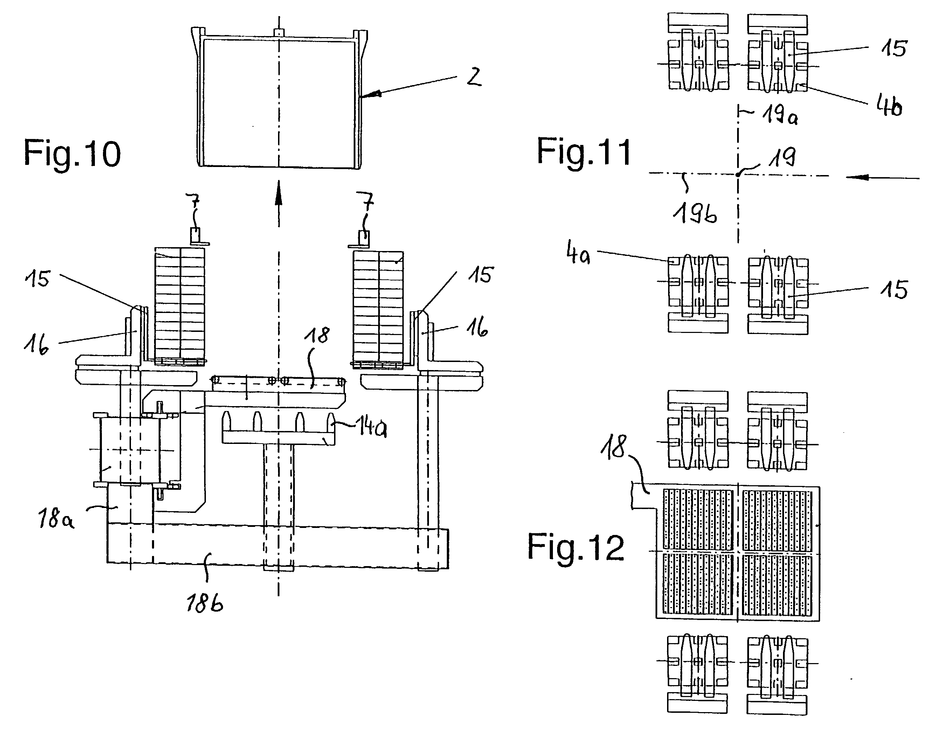

Fig. 4 zeigt die Paletten 4a, 4b im ausgerichteten Zustand mit an zwei Palettenseiten anliegenden Schubleisten 10a, 10b. Weiter zeigt Fig 4 oben und unten jeweils zwei nebeneinander angeordnete ein- und ausfahrbare Gabeln 15, die jeweils paarweise vor einer der Paletten 4a, 4b positioniert sind. Die Gabeln 15 sind außerhalb des Behälters an dessen offenen Seiten jeweils an einem Hubgerüst 16 (s. Fig. 10) befestigt. Der Einfahrvorgang der Gabeln 15 ist in den Figuren 7 und 8 dargestellt Nachdem die Gabeln 15 vollständig in Aufnahmeöffnungen 17 der Paletten eingefahren sind, werden diese angehoben und aus dem Behälter 2 gefahren. Dies ist in Fig. 9 erkennbar.

Fig. 10 zeigt eine Vorderansicht der in Fig 9 dargestellten Position mit nach oben gezogenem Behälter 2. Außerdem ist in Fig. 10 die Anlagefläche 9 in ihrer abgesenkten Stellung gezeigt. In den dadurch freien Bereich ist ein Horizontalförderer 18 bewegbar (in Fig. 10 befindet sich der Horizontalförderer 18 bereits in dieser Position). Hierzu ist der Horizontalförderer 18 auskragend an einem der vertikalen Träger 18a abgestützt, der wiederum auf einem horizontalen Träger 18b in dessen Längsrichtung verfahrbar ist.

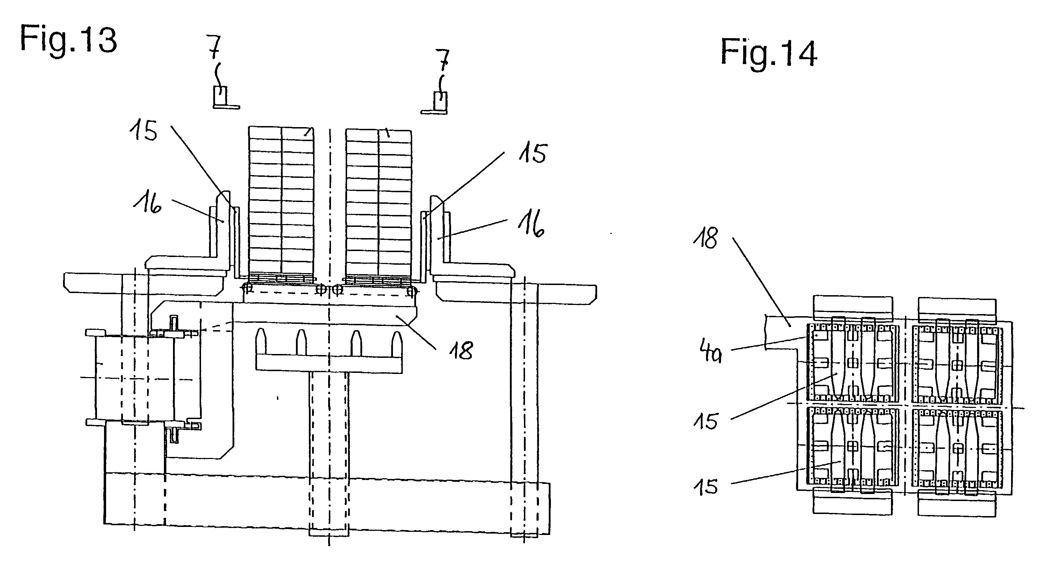

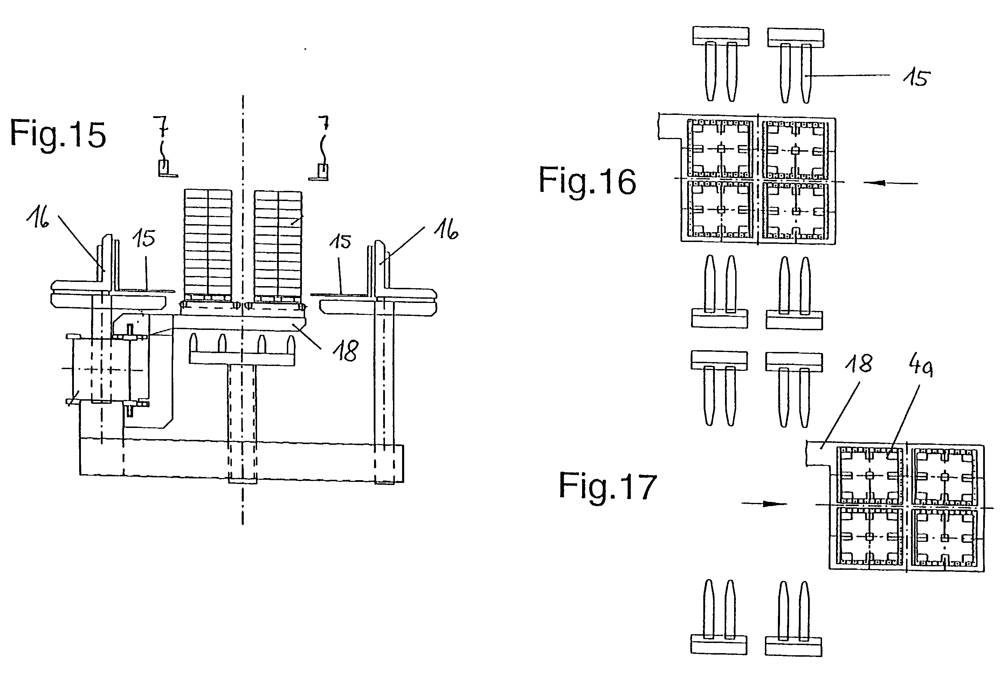

Fig. 11 zeigt noch einmal die Position der Paletten gemaß Fig. 10 in bezug auf ein Zentrum 19 und die beiden unabhängigen Richtungen 19a, 19b. Fig. 12 zeigt eine Draufsicht gemäß Fig. 10. Zur Übergabe der Paletten 4a, 4b an den Horizontalförderer 18 werden, wie in Fig 13 gezeigt, die Gabeln 15 wiederum in den Förderbereich eingefahren, die Paletten 4a, 4b auf dem Horizontalförderer 18 abgelegt und die Gabeln 15 zurückgefahren (Fig. 15). Die zugehörige Draufsicht ist in Fig. 14 zu sehen. Mit zurückgefahrenen Gabeln 15 bewegt sich der Honzontalforderer 18 aus dem Umschlag- und Positionierbereich, wie dies in den Figuren 16 und 17 gezeigt ist.

### Bezugszeichenliste:

- 1: Fördereinrichtung
- 2: Behälter
- 3: Boden
- 4a: Palette
- 4b: Palette
- 5: Ablagefläche
- 6: Halteelement
- 7: Zentrierrahmen
- 8: Vorzentrieröffnung
- 9: Auflagefläche
- 9a: Rahmen
- 10a: Schubleiste
- 10b: Schubleiste
- 11: Anlagefläche
- 12: Feder
- 13: Öffnung
- 14: Element
- 14a: Keil
- 15: Gabel
- 16: Hubgerüst
- 17: Aufnahmeöffnung
- 18: Horizontalförderer
- 18a: vertikaler Träger
- 18b: horizontaler Träger
- 19: Zentrum
- 19a: unabhängige Richtung
- 19b: unabhängige Richtung

## Patentansprüche

1. Positioniereinrichtung für mindestens eine Palette (4a, 4b), die auf einer Ablageflache eines heb- und senkbaren, mindestens eine offene Seite aufweisenden Behälters (2), insbesondere zum Entladen von Schiffen, abgelegt ist, wobei die Ablagefläche (5) um ein vorbestimmtes Maß größer als die Paletten sind,
**dadurch gekennzeichnet,**
**daß** die Ablagefläche (5) an zwei gegenüberliegenden Seiten durch zwei vertikale parallel zueinander angeordnete, synchron in eine zentrische Lage gegeneinander verschiebbare Anlageflächen (11) begrenzt ist,
**daß** der Behälter (2) von oben in eine zur Außenkontur des Behälterquerschnitts korrespondierende Vorzentrieröffnung (8) eines Zentrierrahmens (7) einsetzbar und auf eine darunter angeordnete horizontale Auflagefläche (9) aufsetzbar ist, wobei die Anlageflachen (11) durch Umlenkung der Gewichtskraft des beladenen Behälters (2) selbsttätig bis auf die Palettenbreite aufeinander zu bewegbar sind.

2. Positioniereinrichtung nach Anspruch 1,
**dadurch gekennzeichnet,**
**daß** an der Auflageflache (9) vertikal nach oben gerichtete, beim Aufsetzen des Behälters (2) in Öffnungen (13) des Behälterbodens (3) eindringende und sich im aufgesetzten Zustand über die Auflagefläche (9) hinaus in den Behälter (2) hinein erstreckende Elemente (14) angeordnet sind, die mit den Anlageflachen (11) derart korrespondieren, daß die Anlageflächen beim (11) Aufsetzen des Behälters (2) jeweils auf die gegenüberliegende Seitenfläche der Palette (4a, 4b) hin bewegbar sind.

3. Positioniereinrichtung nach einem der Ansprüche 1 oder 2,
**dadurch gekennzeichnet,**
**daß** jedes Element (14) als mit der Spitze vertikal nach oben gerichteter Keil (14a) ausgebildet ist, dessen keilförmige Seite der jeweils zugehörigen Anlagefläche (11) zugewandt ist und von unten nach oben gesehen schräg nach außen von der Anlagefläche (11) wegführend verläuft.

4. Positioniereinrichtung nach einem der Ansprüche 1 bis 3,
**dadurch gekennzeichnet,**
**daß** jede Anlagefläche (11) an einer plattenförmigen Schubleiste (10a, 10b) ausgebildet ist.

5. Positioniereinrichtung nach Anspruch 4,
**dadurch gekennzeichnet,**
**daß** jede Schubleiste (10a, 10b) durch zwei in Leistenlängsrichtung beabstandete Keile (14a) bewegbar ist.

6. Positioniereinrichtung nach einem der Ansprüche 4 oder 5,
**dadurch gekennzeichnet,**
**daß** jede Schubleiste (10a, 10b) durch Rückstellfedern (12?) in ihre Ausgangslage rückstellbar ist.

7. Positioniereinrichtung nach einem der Ansprüche 1 bis 6,
**dadurch gekennzeichnet,**
**daß** jede Öffnung (13) als Langloch ausgebildet ist, dessen Längserstreckung quer zur Anlagefläche (11) verlauft.

8. Positioniereinrichtung nach einem der Ansprüche 4 bis 7,
**dadurch gekennzeichnet,**
**daß** jede Schubleiste (10a, 10b) in ihrer Ausgangslage die darunterliegenden Öffnungen (13) nahezu vollständig abdeckt

9. Positioniereinrichtung nach einem der Ansprüche 1 bis 8,
**dadurch gekennzeichnet,**
**daß** die Auflagefläche (9) auf einem vertikal heb- und senkbaren Rahmen (9a) angeordnet ist.

10. Fördereinrichtung für mindestens eine Palette, die auf einer Ablagefläche eines heb- und senkbaren, mindestens eine offene Seite aufweisenden Behälters (2), insbesondere zum Entladen von Schiffen, abgelegt ist, wobei die Ablagefläche (5) um ein vorbestimmtes Maß größer als die Paletten sind,
mit einer Positioniereinrichtung nach einem der Ansprüche 1 bis 9,
**dadurch gekennzeichnet,**
**daß** der obere Rand des Behälters (2) mit mindestens einem Halteelement (6) versehen ist, über das er im eingesetzten Zustand am Zentrierrahmen (7) abgestützt ist,
**daß** an mindestens einer der offenen Seiten des Behälters (2) ein Hubgerüst (16) außerhalb des Behälters (2) vorgesehen ist, an dem zwei in Richtung parallel zu den Anlageflächen (11) in Aufnahmeöffnungen (17) der davor abgelegten Palette (4a, 4b) ein- und ausfahrbare horizontale Gabeln (15) vorgesehen sind, durch welche die Paletten (4a, 4b) anhebbar und aus dem Behälter (2) bewegbar sind,
**daß** bei aus dem Behälter (2) nach außen bewegten Paletten (4a, 4b) und entferntem Behälter (2) in den Bereich der abgesenkten Ablagefläche (5) ein Horizontalförderer (18) bewegbar ist und
**daß** die Paletten (4a, 4b) auf dem Horizontalförderer (18) durch Einfahren und Absenken der Gabeln (15) ablegbar und nach Zurückfahren der Gabeln (15) durch den Horizontalförderer (18) zu einem anderen Ort hin transportierbar sind

## Claims

1. Positioning arrangement for at least one pallet (4a, 4b) which is deposited on a depositing surface of a raisable and lowerable container (2), having at least one open side, in particular for unloading ships, the depositing surface (5) being larger than the pallets by a predetermined extent, **characterized in that** the depositing surface (5) is bounded on two opposite sides by two vertical abutment surfaces (11) which are arranged parallel to one another and can be displaced synchronously in relation to one another into a central position, **in that** the container (2) can be inserted from above into a preliminary centring opening (8) of a centring frame (7), said opening corresponding to the outer contour of the container cross section, and can be placed in position on a horizontal bearing surface (9) arranged therebeneath, it being possible for the abutment surfaces (11) to be moved automatically towards one another to the width of the pallet by deflection of the weight of the loaded container (2).

2. Positioning arrangement according to Claim 1, **characterized in that** arranged on the bearing surface (9) are vertically upwardly directed elements (14) which, when the container (2) is placed in position, penetrate into openings (13) of the container base (3) and, once the container has been placed in position, extends beyond the bearing surface (9) into the container (2) and correspond with the abutment surfaces (11) such that, when the (11) [sic] container (2) is placed in position, the abutment surfaces can be moved in each case in the direction of the opposite side surface of the pallet (4a, 4b).

3. Positioning arrangement according to either of Claims 1 and 2, **characterized in that** each element (14) is designed as a wedge (14a) which has the tip directed vertically upwards and of which the wedge-shaped side is directed towards the respectively associated abutment surface (11) and runs such that, as seen from bottom to top, it slopes outwards from the abutment surface (11).

4. Positioning arrangement according to one of Claims 1 to 3, **characterized in that** each abutment surface (11) is formed on a plate-like push bar (10a, 10b).

5. Positioning arrangement according to Claim 4, **characterized in that** each push bar (10a, 10b) can be moved by two wedges (14a) spaced apart in the longitudinal direction of the bar.

6. Positioning arrangement according to either of Claims 4 and 5, **characterized in that** each push bar (10a, 10b) can be restored into its initial position by restoring springs (12? [sic]).

7. Positioning arrangement according to one of Claims 1 to 6, **characterized in that** each opening (13) is designed as a slot which has its longitudinal extent running transversely to the abutment surface (11).

8. Positioning arrangement according to one of Claims 4 to 7, **characterized in that**, in its initial position, each push bar (10a, 10b) more or less completely covers the openings (13) located therebeneath.

9. Positioning arrangement according to one of Claims 1 to 8, **characterized in that** the bearing surface (9) is arranged on a vertically raisable and lowerable frame (9a).

10. Conveying arrangement for at least one pallet which is deposited on a depositing surface of a raisable and lowerable container (2), having at least one open side, in particular for unloading ships, the depositing surface (5) being larger than the pallets by a predetermined extent, having a positioning arrangement according to one of Claims 1 to 9, **characterized in that** the top border of the container (2) is provided with at least one retaining element (6) via which it is supported on the centring frame (7) once inserted therein, **in that**, on at least one of the open sides of the container (2), a lifting framework (16) is provided outside the container (2), there being provided on said lifting framework two horizontal forks (15) which can be moved, in the direction parallel to the abutment surfaces (11), into and out of accommodating openings (17) of the pallet (4a, 4b) deposited in front of the frame, and by means of which the pallets (4a, 4b) can be raised and moved out of the container (2), **in that**, with the pallets (4a, 4b) moved outwards out of the container (2) and with the container (2) removed, a horizontal conveyor (18) can be moved into the region of the lowered depositing surface (5), and **in that** the pallets (4a, 4b) can be deposited on the horizontal conveyor (18) by virtue of the forks (15) being moved in and lowered and, once the forks (15) have been moved back, can be transported to some other location by the horizontal conveyor (18).

## Revendications

1. Dispositif de positionnement pour au moins une palette (4a, 4b) qui est déposée sur une surface de dépose d'un conteneur (2) pouvant être soulevé et abaissé et comportant au moins un côté ouvert, notamment pour le déchargement de bateaux, les surfaces (5) de dépose étant plus grandes que les palettes d'un montant prédéfini,
**caractérisé en ce que** la surface (5) de dépose est délimitée sur deux côtés opposés par deux faces (11) d'application verticales, disposées en parallèle et pouvant être déplacées l'une par rapport à l'autre de façon synchrone dans une position centrée,
**en ce que** le conteneur (2) peut être inséré par le haut dans une ouverture (8) de pré-centrage, correspondant au contour extérieur de la section du conteneur, d'un cadre (7) de centrage, et posé sur une surface (9) de pose horizontale sous-jacente,
les faces (11) d'application pouvant, en renvoyant la force massique du conteneur (2) chargé, être automatiquement rapprochées l'une de l'autre jusqu'à la largeur de la palette.

2. Dispositif de positionnement suivant la revendication 1, **caractérisé en ce que** des éléments (14) dirigés verticalement vers le haut sont disposés sur la surface (9) de pose, éléments qui pénètrent dans des ouvertures (13) du fond (3) du conteneur lors de la pose du conteneur (2) et qui, lorsque le récipient est posé, s'étendent au-delà de la surface (9) de pose à l'intérieur du conteneur (2), les éléments (14) correspondant avec les faces (11) d'application de telle sorte que les faces (11) d'application, lors de la pose du conteneur (2), sont respectivement déplacées vers la face latérale opposée de la palette (4a, 4b).

3. Dispositif de positionnement suivant la revendication 1 ou 2, **caractérisé en ce que** chaque élément (14) est réalisé sous la forme d'un coin (14a) dont la pointe est dirigée verticalement vers le haut et dont le côté cunéiforme est tourné vers la face (11) d'application associée respective, et qui, vu de bas en haut, s'étend en oblique vers l'extérieur en s'éloignant de la face (11) d'application.

4. Dispositif de positionnement suivant l'une des revendications 1 à 3, **caractérisé en ce que** chaque face (11) d'application est formée sur un rebord (10a, 10b) coulissant en forme de plaque.

5. Dispositif de positionnement suivant la revendication 4, **caractérisé en ce que** chaque rebord (10a, 10b) coulissant peut être déplacé par deux coins (14a) espacés dans la direction longitudinale du rebord.

6. Dispositif de positionnement suivant la revendication 4 ou 5, **caractérisé en ce que** chaque rebord (10a, 10b) coulissant peut être ramené dans sa position initiale par des ressorts (12) de rappel.

7. Dispositif de positionnement suivant l'une des revendications 1 à 6, **caractérisé en ce que** chaque ouverture (13) est réalisée sous forme de trou oblong dont le développement longitudinal s'étend transversalement à la face (11) d'application.

8. Dispositif de positionnement suivant l'une des revendications 4 à 7, **caractérisé en ce que** chaque rebord (10a, 10b) coulissant, dans sa position initiale, recouvre quasi totalement les ouvertures (13) sous-jacentes.

9. Dispositif de positionnement suivant l'une des revendications 1 à 8, **caractérisé en ce que** la surface (9) de pose est disposée sur un cadre (9a) pouvant être soulevé et abaissé.

10. Dispositif de transport pour au moins une palette qui est déposée sur une surface de dépose d'un conteneur (2) pouvant être soulevé et abaissé et comportant au moins un côté ouvert, notamment pour le déchargement de bateaux, les surfaces (5) de dépose étant plus grandes que les palettes d'un montant prédéfini,
équipé d'un dispositif de positionnement suivant l'une des revendications 1 à 9,
**caractérisé**
**en ce que** le bord supérieur du conteneur (2) est pourvu d'au moins un élément (6) de maintien, par lequel il s'appuie, lorsqu'il est inséré, contre le cadre (7) de centrage,
**en ce qu'**un mât (16) de levage est prévu à l'extérieur du conteneur (2) sur au moins un des côtés ouverts du conteneur (2), mât sur lequel sont prévues deux fourches (15) horizontales, qui peuvent être rentrées et sorties dans une direction parallèle aux faces (11) d'application dans des ouvertures (17) réceptrices de la palette (4a, 4b) déposée devant ces fourches, les fourches (15) permettant de soulever les palettes (4a, 4b) et de les sortir du conteneur (2),
**en ce que**, lorsque les palettes (4a, 4b) sont déplacées vers l'extérieur hors du conteneur (2) et que le conteneur (2) est éloigné, un convoyeur (18) horizontal peut être déplacé dans la région de la surface (5) de dépose abaissée,
et **en ce que** les palettes (4a, 4b) peuvent être déposées sur le convoyeur (18) horizontal en rentrant et abaissant les fourches (15) et, après avoir retiré les fourches (15), elles peuvent être transportées ailleurs par le convoyeur (18) horizontal.
